# EUROPEAN PATENT APPLICATION

(11) **EP 4 773 595 A1**
(43) Date of publication of application: **08.07.2026**
(21) Application number: 24869711.2
(22) Date of filing: 30.04.2024
(51) Int. Cl.: H04N 19/103

(54) **SIGNAL DETERMINATION METHOD AND DEVICE, STORAGE MEDIUM, AND ELECTRONIC DEVICE**

(30) Priority: 28.09.2023 CN 202311291483
(71) Applicant: ZTE CORPORATION, Shenzhen, Guangdong 518057 (CN)
(72) Inventor: JIA, Menghu, Shenzhen, Guangdong 518057 (CN); GAO, Ying, Shenzhen, Guangdong 518057 (CN); BAI, Yaxian, Shenzhen, Guangdong 518057 (CN); XIE, Shaowei, Shenzhen, Guangdong 518057 (CN); HUANG, Cheng, Shenzhen, Guangdong 518057 (CN)
(74) Representative: Chimini, Francesco
(86) International application number: PCT/CN2024/090983
(87) International publication number: WO 2025/066143

(57) **Abstract**

Embodiments of the present disclosure provide a signal determination method and device, a storage medium, and an electronic device. The method comprises: determining prediction information of a first prediction mode; and when it is determined that the prediction information comes from a second prediction mode, on the basis of a signal of a technology used by the second prediction mode, determining a signal of a technology used by the first prediction mode.

## Description

### Cross-Reference to Related Application

The present disclosure is based on and claims priority to Chinese patent application 202311291483.0 filed on September 28, 2023 and entitled "Signal Determination Method and Device, Storage Medium, and Electronic Device", the disclosure of which is incorporated herein by reference in its entirety.

### Technical Field

The present disclosure relates to the field of communications, and in particular, to a signal determination method and device, a storage medium, and an electronic device.

### Background

At present, two technologies in an Intra Block Copy (IBC) mode, namely a Local Illumination Compensation (LIC) technology and an IBC Filter (FIBC) technology, generate prediction blocks by performing a transformation or filtering on IBC candidate blocks. In an IBC merge mode, the enablement of LIC and FIBC does not require signaling transmission; instead, the enablement of LIC and FIBC is derived from candidates in a merge list. That is, when the LIC or FIBC of a selected candidate in the merge list is enabled, the LIC or FIBC of the current coding unit is enabled accordingly.

When constructing the IBC merge list, candidate motion information is acquired by sequentially scanning coded blocks such as spatially adjacent blocks, non-adjacent blocks and historical blocks. When an Intra Template Match Prediction (ITMP) block is scanned, motion information such as a Block Vector (BV) of the ITMP block is also added as a candidate to the IBC merge list. Moreover, when the current coding unit selects the motion information of the ITMP block for prediction, filtering technologies such as LIC and FIBC will be forcibly disabled, resulting in the failure to receive the signals of LIC and FIBC.

An effective solution has not yet been proposed for the problem in the related art that a signal of a technology adopted by a first prediction mode cannot be determined in an IBC merge prediction mode.

Therefore, it is necessary to improve the related art to overcome the aforementioned defects therein.

### Summary

The embodiments of the present disclosure provide a signal determination method and device, a storage medium, and an electronic device, which may at least solve the problem in the related art that a signal of a technology adopted by a first prediction mode cannot be determined in an IBC merge prediction mode.

According to an aspect of the embodiments of the present disclosure, provided is a signal determination method, including: determining prediction information of a first prediction mode; and in a case of determining that the prediction information is from a second prediction mode, determining a signal of a technology adopted by the first prediction mode according to a signal of a technology adopted by the second prediction mode.

In an exemplary embodiment, after determining the prediction information of the first prediction mode, the signal determination method further includes: in a case of determining that the prediction information is not from the second prediction mode, determining that a signal of a part of technologies of the first prediction mode is identical to a signal of the same technologies in the prediction information.

In an exemplary embodiment, after determining the signal of the technology adopted by the first prediction mode according to the signal of the technology adopted by the second prediction mode, or determining that the signal of the part of technologies of the first prediction mode is identical to the signal of the same technologies in the prediction information, the signal determination method further includes: determining whether to enable a relevant prediction processing technology according to the determined signal of the technology adopted by the first prediction mode; and in a case of determining to enable the relevant prediction processing technology, applying the relevant prediction processing technology to a target reference block.

In an exemplary embodiment, determining the signal of the technology adopted by the first prediction mode according to the signal of the technology adopted by the second prediction mode includes: in a case where the first prediction mode is an Intra Block Copy (IBC) mode and the second prediction mode is an Intra Template Match Prediction (ITMP) mode, enabling an IBC Filter (FIBC) of a current coding unit when a Filter Linear Model (FLM) of a candidate ITMP is enabled, and disabling the FIBC of the current coding unit when the FLM of the candidate ITMP is disabled, so as to obtain the signal of the technology adopted by the first prediction mode.

In an exemplary embodiment, determining the signal of the technology adopted by the first prediction mode according to the signal of the technology adopted by the second prediction mode includes: in a case where the first prediction mode is an Intra Block Copy (IBC) mode and the second prediction mode is an Intra Template Match Prediction (ITMP) mode, enabling a Local Illumination Compensation (LIC) of a current coding unit when a Template Match Prediction-Local Illumination Compensation (TMP-LIC) of a candidate ITMP is enabled, and disabling the LIC of the current coding unit when the TMP-LIC of the candidate ITMP is disabled, so as to obtain the signal of the technology adopted by the first prediction mode.

In an exemplary embodiment, determining the prediction information of the first prediction mode includes: determining a coding unit to be subjected to encoding processing or a decoding unit to be subjected to decoding processing; and determining the prediction information of the first prediction mode according to the coding unit or the decoding unit.

In an exemplary embodiment, determining the prediction information of the first prediction mode according to the coding unit or the decoding unit includes: determining a candidate set corresponding to the coding unit or the decoding unit; and traversing the candidate set to acquire the prediction information of the first prediction mode.

According to another aspect of the embodiments of the present disclosure, also provided is a signal determination device, including: a first determination module, configured to determine prediction information of a first prediction mode; and a second determination module, configured to, in a case of determining that the prediction information is from a second prediction mode, determine a signal of a technology adopted by the first prediction mode according to a signal of a technology adopted by the second prediction mode.

According to still another embodiment of the present disclosure, also provided is a computer-readable storage medium. The computer-readable storage medium stores a computer program, wherein the computer program, when running, is configured to execute the signal determination method.

According to yet another embodiment of the present disclosure, also provided is an electronic device, including a memory, a processor and a computer program stored on the memory and executable on the processor, wherein the processor is configured to run the computer program so as to execute signal determination method.

Through the embodiments of the present disclosure, in a case of determining that prediction information determined by a first prediction mode is from a second prediction mode, a signal of a technology adopted by the first prediction mode can be determined according to a signal of a technology adopted by the second prediction mode. This scheme solves the technical problem in the related art that the signal of the technology adopted by the first prediction mode cannot be determined in an IBC merge prediction mode, thereby achieving the technical effect that the signal of the technology adopted by the first prediction mode can also be determined in the IBC merge prediction mode.

### Brief Description of the Drawings

The accompanying drawings, which are incorporated in and constitute a part of the present disclosure, serve to provide a further understanding of the present disclosure. The exemplary embodiments of the present disclosure and their descriptions are used to explain the present disclosure and shall not be construed as an undue limitation of the present disclosure. In the drawings:
Fig. 1 is a block diagram illustrating the hardware structure of a computer terminal for a signal determination method according to one or more embodiments of the present disclosure;
Fig. 2 is a flowchart (1) of a signal determination method according to one or more embodiments of the present disclosure;
Fig. 3 is a schematic diagram of a hybrid coding framework according to one or more embodiments of the present disclosure;
Fig. 4 is a flowchart (2) of a signal determination method according to one or more embodiments of the present disclosure;
Fig. 5 is a flowchart (3) of a signal determination method according to one or more embodiments of the present disclosure;
Fig. 6 is a flowchart (4) of a signal determination method according to one or more embodiments of the present disclosure;
Fig. 7 is a flowchart (5) of a signal determination method according to one or more embodiments of the present disclosure;
Fig. 8 is a flowchart (6) of a signal determination method according to one or more embodiments of the present disclosure; and
Fig. 9 is a structure block diagram of a signal determination device according to one or more embodiments of the present disclosure.

### Detailed Description of the Embodiments

To enable those having ordinary skill in the art to better understand the solutions of the present disclosure, the technical solutions in the embodiments of the present disclosure will be described clearly and completely below in conjunction with the accompanying drawings of the embodiments of the present disclosure. Obviously, the embodiments described are only some rather than all of the embodiments of the present disclosure. All other embodiments obtained by those having ordinary skill in the art based on the embodiments of the present disclosure without creative efforts shall fall within the protection scope of the present disclosure.

It should be noted that the terms "first", "second" and the like in the specification and claims of the present disclosure and the above-mentioned accompanying drawings are used to distinguish similar objects, and are not necessarily used to describe a specific order or sequence. It should be understood that the data used in this way can be interchanged under appropriate circumstances, so that the embodiments of the present disclosure described herein can be implemented in an order other than those illustrated or described herein. In addition, the terms "comprise/include", "have" and any variations thereof are intended to cover non-exclusive inclusion. For example, a process, method, system, product or device that includes a series of operations or units is not necessarily limited to those operations or units explicitly listed, but may include other operations or units that are not explicitly listed or are inherent to such a process, method, product or device.

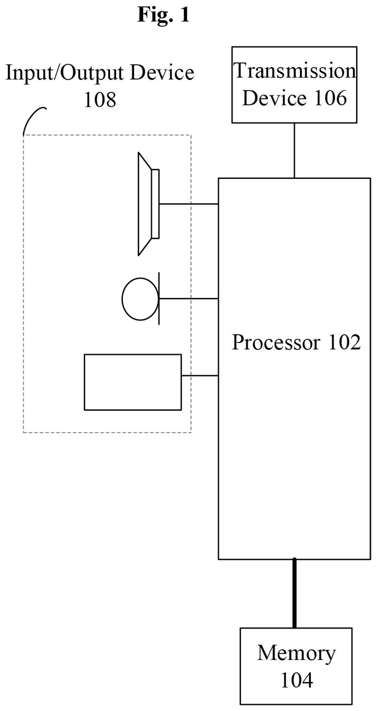

The method embodiments provided in the embodiments of the present disclosure may be executed on a computer terminal or a similar computing device. Taking the execution on a computer terminal as an example, Fig. 1 is a block diagram illustrating the hardware structure of a computer terminal for a signal determination method according to one or more embodiments of the present disclosure. As shown in Fig. 1, the computer terminal may include one or more processors 102 (only one is shown in Fig. 1) (each of the one or more processors 102 may include, but is not limited to, a Microprocessor Unit (MPU) or a Programmable Logic Device (PLD)) and a memory 104 for storing data. In an exemplary embodiment, the aforementioned computer terminal may further include a transmission device 106 for communication functions and an input/output device 108. Those having ordinary skill in the art can understand that the structure shown in Fig. 1 is only schematic and does not limit the structure of the aforementioned computer terminal. For example, the computer terminal may also include more or fewer components than those shown in Fig. 1, or have a different configuration with the same or more functions than those shown in Fig. 1.

The memory 104 may be used to store computer programs, such as software programs and modules of application software, for example, the computer program corresponding to the signal determination method in the embodiments of the present disclosure. The one or more processors 102 execute various functional applications and data processing by running the computer program stored in the memory 104, that is, implementing the aforementioned signal determination method. The memory 104 may include a high-speed random access memory, and may also include a non-volatile memory, such as one or more magnetic storage devices, flash memory, or other non-volatile solid-state memories. In some instances, the memory 104 may further include one or more memories remotely disposed relative to the one or more processors 102, and the one or more remote memories may be connected to the computer terminal through a network. Examples of the aforementioned network include, but are not limited to, the Internet, an enterprise intranet, a local area network, a mobile communication network, and combinations thereof.

The transmission device 106 is used for receiving or sending data via a network. Specific examples of the aforementioned network may include a wireless network provided by a communication provider of the computer terminal. In an instance, the transmission device 106 includes a Network Interface Controller (NIC), which can be connected to other network devices through a base station so as to communicate with the Internet. In an instance, the transmission device 106 may be a Radio Frequency (RF) module, which is used for communicating with the Internet in a wireless manner.

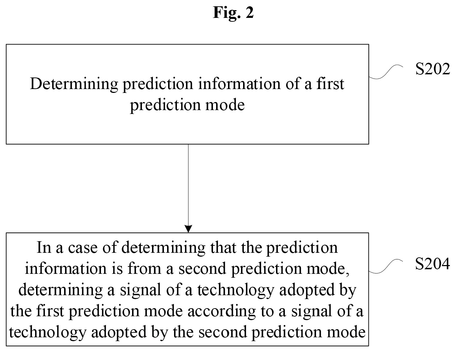

Fig. 2 is a flowchart (1) of a signal determination method according to one or more embodiments of the present disclosure, and the signal determination method is applicable to the aforementioned computer terminal. As shown in Fig. 2, the signal determination method includes the following operations S202 and S204.

In operation S202, prediction information of a first prediction mode is determined.

In operation S204, in a case of determining that the prediction information is from a second prediction mode, a signal of a technology adopted by the first prediction mode is determined according to a signal of a technology adopted by the second prediction mode.

According to the embodiments of the present disclosure, the prediction information of the first prediction mode is determined, and in a case of determining that the prediction information is from the second prediction mode, the signal of the technology adopted by the first prediction mode is determined according to the signal of the technology adopted by the second prediction mode. This scheme solves the technical problem in the related art that the signal of the technology adopted by the first prediction mode cannot be determined in an IBC merge prediction mode, thereby achieving the technical effect that the signal of the technology adopted by the first prediction mode can also be determined in the IBC merge prediction mode.

It should be noted that the signal in the embodiments of the present disclosure may represent information such as an identifier, a switch, a symbol or a flag, which is not limited in the embodiments of the present disclosure.

In an exemplary embodiment, after completing the aforementioned operation S202 of determining the prediction information of the first prediction mode, the signal determination method further includes: in a case of determining that the prediction information is not from the second prediction mode, determining that a signal of a part of technologies of the first prediction mode is identical to a signal of the same technologies in the prediction information.

As an exemplary implementation of the aforementioned embodiment, the first prediction mode at least includes an IBC mode, where the IBC mode includes an IBC merge mode and an IBC Advanced Motion Vector Prediction (AMVP) mode.

In an exemplary embodiment, after completing the aforementioned operation S204 of determining the signal of the technology adopted by the first prediction mode according to the signal of the technology adopted by the second prediction mode, or completing the operation of determining that the signal of the part of technologies of the first prediction mode is identical to the signal of the same technologies in the prediction information, the signal determination method further includes: determining whether to enable a relevant prediction processing technology according to the determined signal of the technology adopted by the first prediction mode; and in a case of determining to enable the relevant prediction processing technology, applying the relevant prediction processing technology to a target reference block.

As an exemplary implementation of the aforementioned embodiment, the relevant prediction processing technology at least includes an LIC technology and/or an FIBC technology, which is not limited in the embodiments of the present disclosure.

In an exemplary embodiment, the implementation process of determining the signal of the technology adopted by the first prediction mode according to the signal of the technology adopted by the second prediction mode in the aforementioned operation S204 specifically includes: in a case where the first prediction mode is an Intra Block Copy (IBC) mode and the second prediction mode is an Intra Template Match Prediction (ITMP) mode, enabling an IBC Filter (FIBC) of a current coding unit when a Filter Linear Model (FLM) of a candidate ITMP is enabled, and disabling the FIBC of the current coding unit when the FLM of the candidate ITMP is disabled, so as to obtain the signal of the technology adopted by the first prediction mode.

In an exemplary embodiment, the implementation process of determining the signal of the technology adopted by the first prediction mode according to the signal of the technology adopted by the second prediction mode in the aforementioned operation S204 may also be realized in the following manner, which specifically includes: in a case where the first prediction mode is an Intra Block Copy (IBC) mode and the second prediction mode is an Intra Template Match Prediction (ITMP) mode, enabling a Local Illumination Compensation (LIC) of a current coding unit when a TMP-LIC (Template Match Prediction-Local Illumination Compensation, which is an LIC-like technology for TMP blocks) of a candidate ITMP is enabled, and disabling the LIC of the current coding unit when the TMP-LIC of the candidate ITMP is disabled, so as to obtain the signal of the technology adopted by the first prediction mode.

In an exemplary embodiment, the implementation process of determining the prediction information of the first prediction mode in the aforementioned operation S202 specifically includes the following operations S11 and S12. In operation S11, a coding unit to be subjected to encoding processing or a decoding unit to be subjected to decoding processing is determined. In operation S12, the prediction information of the first prediction mode is determined according to the coding unit or the decoding unit.

In an exemplary embodiment, the specific process of performing the aforementioned operation S12 of determining the prediction information of the first prediction mode according to the coding unit or the decoding unit includes: determining a candidate set corresponding to the coding unit or the decoding unit; and traversing the candidate set to acquire the prediction information of the first prediction mode.

As an exemplary implementation of the aforementioned embodiment, after traversing the candidate set, the signal determination method further includes: selecting a candidate with a minimum coding cost as motion information of the current coding unit, and encoding a candidate index of the candidate and other relevant information into a bitstream.

The signal determination method is further described below in conjunction with the following embodiments.

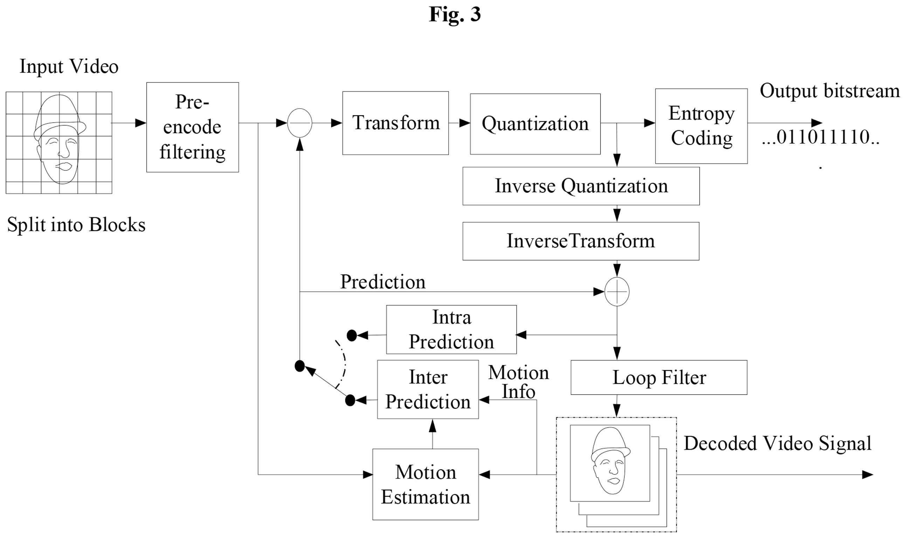

The implementation of this embodiment is based on a hybrid coding framework. Fig. 3 is a schematic diagram of a hybrid coding framework according to one or more embodiments of the present disclosure. The aforementioned hybrid coding framework is a coding framework for a new-generation video coding standard H.266/VVC, and specifically includes modules such as intra prediction, inter prediction, transformation, quantization, loop filtering and entropy coding, as shown in Fig. 3 in detail.

The overall framework process of the encoding end includes the following operations:
An input video is split into frames and then into blocks. Specifically, each frame is first split into a plurality of Coding Tree Units (CTUs), and each CTU may be split into 4 Coding Units (CUs) of the same size in a quadtree manner, or recursively split into CUs of different sizes in a Multiple Type Tree (MTT) structure, i.e., a binary tree or ternary tree structure.

After the aforementioned block splitting is completed, the split blocks need to be sent to an intra prediction module or an inter prediction module for predictive encoding. The intra prediction module is mainly configured to remove the spatial correlation of an image, and predict the current pixel block by using the information of encoded reconstructed blocks to eliminate spatial redundant information. The inter prediction module is mainly configured to remove the temporal correlation of an image, and obtain motion information of each block by using encoded images as reference images of the current frame, thereby eliminating temporal redundancy.

As an exemplary implementation, the process of the encoding end further includes subtracting the prediction values obtained by the aforementioned predictive encoding from the original blocks to obtain residual values, and then performing transformation and quantization on the residuals to remove frequency-domain correlation and implement lossy compression on the data. The transform coding can convert an image from a spatial-domain signal to a frequency-domain signal and concentrate energy in the low-frequency region, and the quantization module can reduce the dynamic range of image coding.

It should be noted that all coding parameters and residuals need to be subjected to entropy coding to form a binary stream for storage or transmission, and the output data of the entropy coding module is the bitstream of the original video after compression.

Further, the prediction values and the residuals after inverse quantization and inverse transformation can be added to obtain block reconstruction values, and a reconstructed image is finally formed.

As an exemplary implementation, the reconstructed image is subjected to a filtering operation by a loop filter and stored in an image buffer, and can be used as a reference image for subsequent use. The loop filtering technologies in H.266/VVC include Luma Mapping With Chroma Scaling (LMCS), Deblocking Filter (DBF), Sample Adaptive Offset (SAO) and Adaptive Loop Filter (ALF). LMCS improves compression efficiency by reallocating codewords for information within a dynamic range. DBF is configured to reduce blocking artifacts. SAO is configured to mitigate ringing artifacts. ALF can reduce decoding errors.

The overall framework process of the decoding end includes the following operations.

Prediction modes are obtained by parsing the bitstream to get prediction values, and residuals parsed from the bitstream are subjected to inverse transformation and inverse quantization. The prediction values and the residuals after inverse quantization and inverse transformation are added to obtain block reconstruction values, and a reconstructed image is finally formed. The reconstructed image is subjected to a filtering operation by a loop filter and then stored in an image buffer to serve as a reference image for subsequent use.

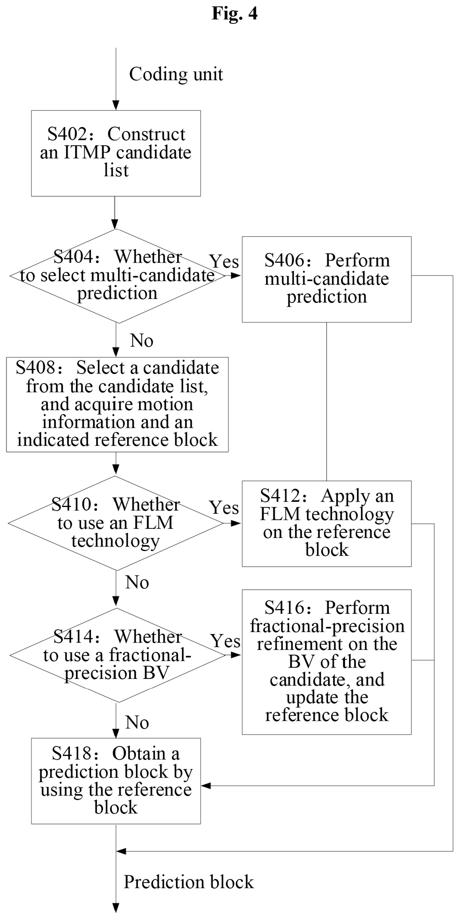

In an exemplary embodiment, the second prediction mode includes an ITMP mode, which is an intra prediction technology. Fig. 4 is a flowchart (2) of a signal determination method according to one or more embodiments of the present disclosure, which illustrates the prediction operations of the ITMP mode. The specific operations S402 to S418 are as follows.

In operation S402, an ITMP candidate list is constructed.

As an exemplary implementation, in the execution of the aforementioned operation S402, multiple reference block candidates sorted in ascending order of template cost are first searched within a search range of a reconstructed region of a current frame, and a candidate list is constructed by the multiple reference block candidates. A template refers to a reconstructed pixel region formed by the area above or to the left of a coding unit or a reference block, or an L-shaped reconstructed pixel region formed by the area above and the area to the left of the coding unit or the reference block. The template cost refers to the Sum of Absolute Difference (SAD) between the template of the coding unit and the template of the reference block and/or the Sum of Absolute Transformed Difference (SATD) obtained by performing a Hadamard transform followed by summing the absolute values.

It should be noted that each candidate in the candidate list has a Block Vector (BV), i.e., a positional offset from the top-left corner of the coding unit to the top-left corner of the candidate reference block. The BV and information related to other prediction processing technologies of a candidate are collectively referred to as motion information hereinafter.

In operation S404, it is determined whether the current coding unit adopts multi-candidate prediction or single-candidate prediction. If multi-candidate prediction is adopted, operation S406 is performed; otherwise, single-candidate prediction is adopted and operation S408 is performed.

In operation S406, multi-candidate prediction is performed, a prediction block of the current coding unit is output, and the prediction process is ended.

In operation S408, a candidate is selected from the candidate list, motion information is acquired, and a reference block is obtained.

In operation S410, it is determined whether an FLM technology is to be used. If the FLM technology is to be used, operation S412 is performed; otherwise, operation S414 is performed.

In operation S412, filtering processing is performed on the reference block by using the FLM technology, and operation S418 is performed.

In operation S414, it is determined whether a fractional-precision BV is to be used to refine the BV of the candidate. If yes, operation S416 is performed; otherwise, operation S418 is performed.

In operation S416, fractional-precision refinement is performed on the BV of the candidate, a better fractional-precision BV is selected, and the reference block pointed to by the BV is acquired.

In operation S418, a prediction block of the current coding unit is obtained by using the reference block, and the prediction process is ended.

It should be noted that in the hybrid coding framework, the ITMP technology at the encoding end encodes a signal of a related technology (such as an FLM signal used to indicate the enablement or disablement of an FLM technology) into the bitstream. At the decoding end, after parsing the bitstream to obtain the mode of the current coding unit, if the mode is the ITMP mode, a signal indicating whether single-candidate prediction is adopted is further parsed. If single-candidate prediction is adopted, a candidate index which indicates the selected index position in the candidate list is further parsed. After the corresponding candidate is obtained, the FLM signal which indicates whether the FLM technology is to be enabled is further parsed from the bitstream.

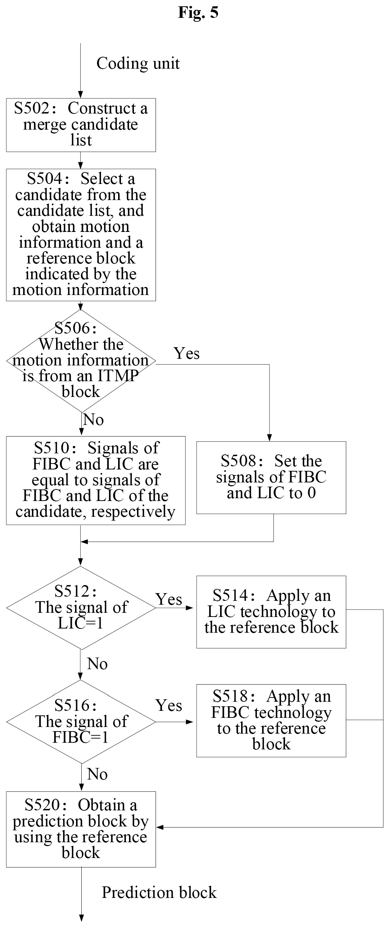

In an exemplary embodiment, the first prediction mode includes an IBC mode, which is an intra prediction technology and specifically includes two modes: an IBC merge mode and an IBC AMVP mode. Fig. 5 is a flowchart (3) of a signal determination method according to one or more embodiments of the present disclosure, which illustrates the prediction operations of the IBC merge mode. The flow includes specific operations S502 to S520 as follows.

In operation S502, a merge candidate list is constructed.

The candidates are mainly derived from spatially adjacent IBC blocks, spatially non-adjacent IBC blocks, historical IBC blocks, default candidates and the like. When a spatially adjacent block or a non-adjacent block is an ITMP-coded block, the motion information of the ITMP block is also added to the candidate list as a candidate.

In operation S504, a candidate is selected from the candidate list to obtain corresponding motion information and a corresponding reference block.

In operation S506, it is determined whether the motion information is from an ITMP mode-coded block. If yes, operation S508 is performed; if not, operation S510 is performed.

In operation S508, the LIC signal and the FIBC signal of the current coding unit are both forcibly set to 0, and operation S512 is performed.

In operation S510, the LIC signal and the FIBC signal of the current coding unit are equal to the LIC signal and the FIBC signal of the candidate, respectively.

In operation S512, it is determined whether the LIC technology is enabled (i.e., whether the LIC signal is equal to 1). If yes, operation S514 is performed; if not, operation S516 is performed.

In operation S514, the LIC technology is applied to the reference block, and operation S520 is performed.

In operation S516, it is determined whether the FIBC technology is enabled (i.e., whether the FIBC signal is equal to 1). If yes, operation S518 is performed; if not, operation S520 is performed.

In operation S518, the FIBC technology is applied to the reference block, and operation S520 is performed.

In operation S520, a prediction block is obtained by using the reference block, and the prediction process is ended.

It should be noted that at the encoding end of the hybrid coding framework, when a coding unit is coded in an IBC merge mode, a signal of the IBC merge mode is encoded into a bitstream, and an index of a selected candidate in the merge candidate list is further encoded into the bitstream. Signals of the LIC and FIBC technologies are both derived (obtained) by referencing signals of the LIC and FIBC technologies of the candidate via a candidate index, and are not encoded into the bitstream. In particular, when the candidate is from an ITMP block, the signals of the LIC and FIBC technologies are both forcibly set to 0, i.e., the LIC and FIBC technologies are disabled. At the decoding end of the hybrid coding framework, after parsing the bitstream to obtain the coding mode and the candidate index, the same signal determination behavior as that at the encoding end is performed.

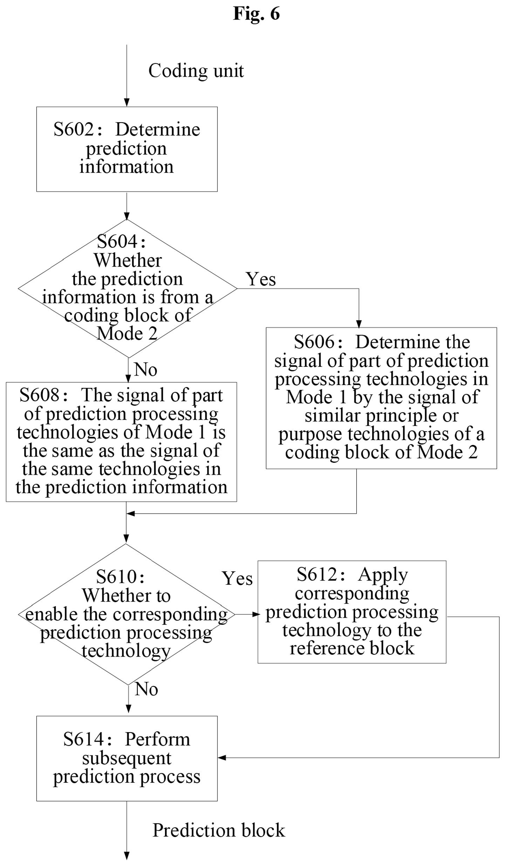

In an exemplary embodiment, the first prediction mode is Mode 1 and the second prediction mode is Mode 2. When Mode 1 selects the information of Mode 2 as prediction information, the signal control of part of technologies in Mode 1 may be derived from the information of other technologies with similar principles or purposes in Mode 2. Fig. 6 is a flowchart (4) of a signal determination method according to one or more embodiments of the present disclosure, and the flow includes specific operations S602 to S614 as shown in Fig. 6.

In operation S602, prediction information of Mode 1 is determined.

There are multiple ways to determine the prediction information. For example, at the encoding end, the final prediction information is obtained through rate-distortion optimization, and at the decoding end, the prediction information of Mode 1 can be obtained by parsing bitstream information.

In operation S604, it is determined whether the prediction information is from Mode 2. If yes, operation S606 is performed; if not, operation S608 is performed.

In operation S606, the signal of part of technologies in Mode 1 is determined by the signal of other prediction processing technologies in Mode 2, and operation S610 is performed.

In operation S608, the signal of part of technologies in Mode 1 is determined by the signal of the same technologies in the prediction information.

In operation S610, it is determined whether the relevant technology is enabled according to the signal of the technology in Mode 1. If enabled, operation S612 is performed; if not, operation S614 is performed.

In operation S612, the related prediction processing technology of Mode 1 is applied to the input.

In operation S614, the subsequent prediction processing procedure is performed.

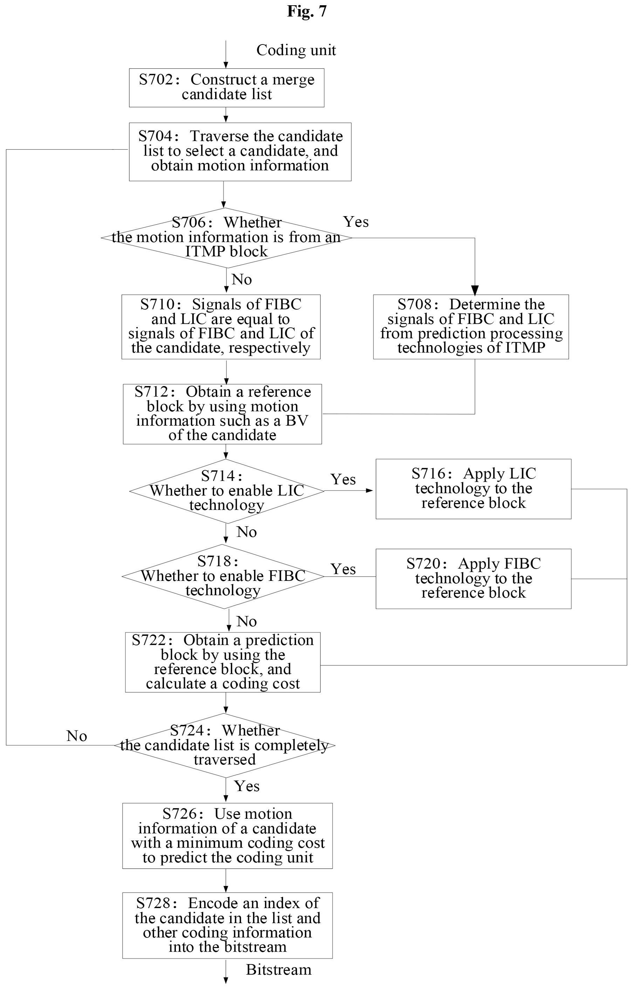

As an exemplary implementation, a video encoding method can be obtained by implementing the signal determination method of the aforementioned embodiment in the hybrid coding framework. The video encoding method can be applied to a device or application for performing encoding processing on a video. When a coding unit is in an IBC merge mode, the signal of the FIBC or the signal of the LIC of the coding unit determines the signal of other prediction processing technologies in an ITMP block when selecting motion information from a candidate ITMP block for prediction. Fig. 7 is a flowchart (5) of a signal determination method according to one or more embodiments of the present disclosure, and the flow includes specific operations S702 to S728 as shown in Fig. 7.

In operation S702, a merge candidate list is constructed.

The candidates are mainly from spatially adjacent IBC blocks, spatially non-adjacent IBC blocks, historical IBC blocks and default candidates. When a spatially adjacent block or a non-adjacent block is an ITMP-coded block, the motion information of the ITMP block is also added to the candidate list as a candidate.

In operation S704, the candidate list is traversed to select a candidate in sequence, and the motion information of the corresponding candidate is obtained.

In operation S706, it is determined whether the motion information is from an ITMP mode-coded block. If yes, operation S708 is performed; otherwise, operation S710 is performed.

In operation S708, a signal of a prediction processing technology in an ITMP block is determined according to a signal of LIC or a signal of FIBC of a current coding unit, and operation S712 is performed.

In the aforementioned operation S708, there are multiple implementation manners for determining signals of other prediction processing technologies in the ITMP block according to the signal of the LIC and the signal of the FIBC of the current coding unit, including but not limited to the following manners.

The signal of the FIBC of the current coding unit determines a signal of FLM in the ITMP block, that is, the FIBC of the current coding unit is enabled when the FLM of the candidate ITMP is enabled, and the FIBC of the current coding unit is disabled when the FLM of the candidate ITMP is disabled; and/or,
the signal of the LIC of the current coding unit determines a signal of a TMP-LIC in the ITMP block, that is, the LIC of the current coding unit is enabled when the TMP-LIC of the candidate ITMP is enabled, and the LIC of the current coding unit is disabled when the TMP-LIC of the candidate ITMP is disabled.

In operation S710, the signal of the LIC and the signal of the FIBC of the current coding unit are equal to the signal of the LIC and the signal of the FIBC of the candidate, respectively.

In operation S712, a reference block is obtained by using a BV of the candidate.

In operation S714, it is determined whether the LIC technology is enabled. If yes, operation S716 is performed; otherwise, operation S718 is performed.

In operation S716, the LIC technology is applied to the reference block, and operation S722 is performed.

In operation S718, it is determined whether the FIBC technology is enabled. If yes, operation S720 is performed; otherwise, operation S722 is performed.

In operation S720, the FIBC technology is applied to the reference block, and operation S722 is performed.

In operation S722, a prediction block is obtained by using the reference block, and a coding cost of the current candidate is calculated.

In operation S724, it is determined whether the candidate list is completely traversed. If completely traversed, operation S726 is performed; otherwise, the process returns to operation S704.

In operation S726, a candidate with a minimum coding cost is selected as motion information of the current coding unit to predict the coding unit.

In operation S728, the candidate index and other relevant information are encoded into the bitstream.

It should be noted that an additional high-level syntax element may be added to any one or more of a Video Parameter Set (VPS), a Sequence Parameter Set (SPS), a Picture Parameter Set (PPS), an Adaptive Parameter Set (APS), a Slice Header (SH), a Picture Header (PH) or a Supplemental Enhancement Information (SEI) to indicate whether the aforementioned signal determination method is enabled. If the aforementioned syntax element exists, the syntax element needs to be transmitted to the decoding end in the bitstream.

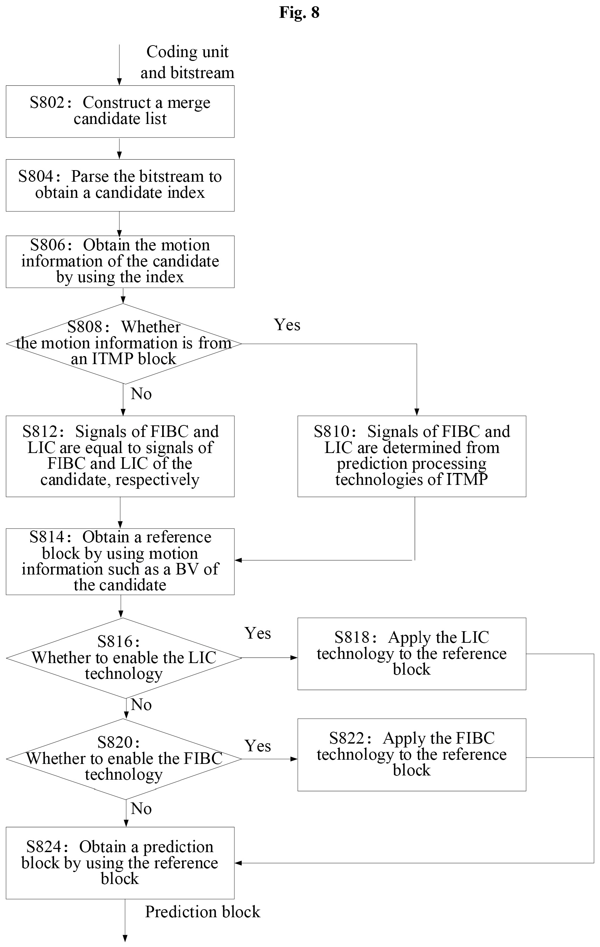

In an exemplary embodiment, a video decoding method corresponding to the video encoding method in the aforementioned embodiment is also provided, and the video decoding method can be applied to a device or application for performing decoding processing on a video. When parsing relevant syntax in the bitstream, if a coding unit is in an IBC merge mode, a corresponding list index is parsed. When selecting motion information derived from a candidate ITMP block for prediction, a signal of FIBC or a signal of LIC of the coding unit determines the signal of other prediction processing technologies in the ITMP block. Fig. 8 is a flowchart (6) of a signal determination method according to one or more embodiments of the present disclosure, and the flow includes specific operations S802 to S824 as shown in Fig. 8.

In operation S802, a merge candidate list is constructed.

The candidates are mainly from spatially adjacent IBC blocks, spatially non-adjacent IBC blocks, historical IBC blocks and default candidates. When a spatially adjacent block or a non-adjacent block is an ITMP-coded block, the motion information of the ITMP block is also added to the candidate list as a candidate.

In operation S804, the bitstream is parsed to obtain a candidate index.

In operation S806, the corresponding candidate is selected from the merge candidate list to obtain the motion information of the candidate.

In operation S808, it is determined whether the motion information is from an ITMP mode-coded block. If yes, operation S810 is performed; if not, operation S812 is performed.

In operation S810, the signal of other prediction processing technologies in the ITMP block is determined by a signal of LIC and a signal of FIBC of the current coding unit, and operation S814 is performed.

It should be noted that in the aforementioned operation S810, there are multiple implementation manners for determining the control of the LIC or FIBC of the coding unit according to the enablement status of the FLM of the ITMP block, specifically including the following manners.

The signal of the FLM in the ITMP block is determined by the current signal of the FIBC, that is, the FIBC of the current coding unit is enabled when the FLM of the candidate ITMP is enabled, and the FIBC of the current coding unit is disabled when the FLM of the candidate ITMP is disabled; and/or,
the signal of the TMP-LIC in the ITMP block is determined by the current signal of the LIC, that is, the LIC of the current coding unit is enabled when the TMP-LIC of the candidate ITMP is enabled, and the LIC of the current coding unit is disabled when the TMP-LIC of the candidate ITMP is disabled.

In operation S812, the signal of the LIC and the signal of the FIBC of the current coding unit are equal to the signal of the LIC and the signal of the FIBC of the candidate, respectively.

In operation S814, a reference block is obtained by using a BV of the candidate.

In operation S816, it is determined whether the LIC technology is enabled. If yes, operation S818 is performed; if not, operation S820 is performed.

In operation S818, the LIC technology is applied to the reference block, and operation S824 is performed.

In operation S820, it is determined whether the FIBC technology is enabled. If yes, operation S822 is performed; if not, operation S824 is performed.

In operation S822, the FIBC technology is applied to the reference block, and operation S824 is performed.

In operation S824, a prediction block is obtained by using the reference block.

It should be noted that if there is a syntax element for indicating whether the aforementioned signal determination method is enabled in any one or more of the VPS, SPS, PPS, APS, SH or SEI parameter sets, the aforementioned syntax element needs to be parsed first, and whether to determine the signal is selected according to the syntax element.

The embodiments of the present disclosure also provide a signal determination device. The signal determination device is configured to implement the foregoing embodiments and exemplary implementations, and descriptions thereof will not be repeated herein. As used below, the term "module" may refer to a combination of software and/or hardware that can implement predetermined functions. Although the signal determination device described in the following embodiment is preferably implemented by software, implementation by hardware or a combination of software and hardware is also possible and contemplated.

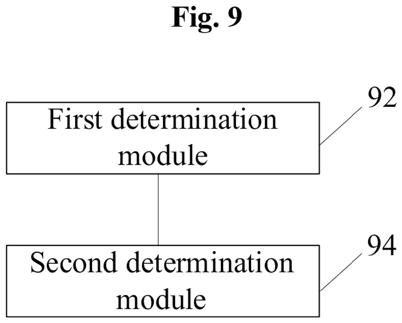

Fig. 9 is a structure block diagram of a signal determination device according to one or more embodiments of the present disclosure. As shown in Fig. 9, the signal determination device includes:
a first determination module 92, configured to determine prediction information of a first prediction mode;
a second determination module 94, configured to, in a case of determining that the prediction information is from a second prediction mode, determine a signal of a technology adopted by the first prediction mode according to a signal of a technology adopted by the second prediction mode.

In an exemplary embodiment, the first determination module 92 is further configured to:
in a case of determining that the prediction information is not from the second prediction mode, determine that a signal of a part of technologies of the first prediction mode is identical to a signal of the same technologies in the prediction information.

In an exemplary embodiment, the second determination module 94 is further configured to:
determine whether to enable a relevant prediction processing technology according to the determined signal of the technology adopted by the first prediction mode; and in a case of determining to enable the relevant prediction processing technology, apply the relevant prediction processing technology to a target reference block.

In an exemplary embodiment, the second determination module 94 is further configured to:
in a case where the first prediction mode is an IBC mode and the second prediction mode is an ITMP mode, enable FIBC of a current coding unit when FLM of a candidate ITMP is enabled, and disable FIBC of the current coding unit when FLM of the candidate ITMP is disabled, so as to determine and obtain the signal of the technology adopted by the first prediction mode.

In an exemplary embodiment, the second determination module 94 is further configured to:
in a case where the first prediction mode is an IBC mode and the second prediction mode is an ITMP mode, enable LIC of a current coding unit when TMP-LIC of a candidate ITMP is enabled, and disable LIC of the current coding unit when TMP-LIC of the candidate ITMP is disabled, so as to obtain the signal of the technology adopted by the first prediction mode.

In an exemplary embodiment, the first determination module 92 includes:
a first determination unit, configured to determine a coding unit to be subjected to encoding processing or a decoding unit to be subjected to decoding processing;
a second determination unit, configured to determine the prediction information of the first prediction mode according to the coding unit or the decoding unit.

In an exemplary embodiment, the second determination unit is further configured to:
determine the prediction information of the first prediction mode according to the coding unit or the decoding unit, including:
determining a candidate set corresponding to the coding unit or the decoding unit; and traversing the candidate set to acquire the prediction information of the first prediction mode.

Through the description of the foregoing implementations, those having ordinary skill in the art can clearly understand that the signal determination method according to the foregoing embodiments may be implemented by means of software plus a necessary general-purpose hardware platform, and certainly may also be implemented by hardware, but the former is a better implementation manner in many cases. Based on such understanding, the technical solutions of the present disclosure essentially, or the parts contributing to the related art, may be embodied in the form of a software product. The computer software product is stored in a readable storage medium (such as ROM/RAM, magnetic disk, optical disk), and includes a number of instructions for enabling a terminal device (which may be a mobile phone, a computer, a server, a network device, or the like) to execute the signal determination method of the embodiments of the present disclosure.

In an exemplary embodiment, the computer-readable storage medium may include, but is not limited to: various media that can store computer programs, such as a USB flash drive, Read-Only Memory (ROM), Random Access Memory (RAM), a removable hard disk, a magnetic disk, or an optical disk.

For specific examples in the present embodiment, reference may be made to the examples described in the foregoing embodiments and exemplary implementations, and details are not described herein again in the present embodiment.

The embodiments of the present disclosure also provide an electronic device, including a memory and a processor, where the memory stores a computer program, and the processor is configured to run the computer program to perform the operations in any one of the foregoing method embodiments.

As an exemplary implementation of the present embodiment, the processor may be configured to execute the following operations S1 and S2 through the computer program.

In operation S1, prediction information of a first prediction mode is determined.

In operation S2, in a case of determining that the prediction information is from a second prediction mode, a signal of a technology adopted by the first prediction mode is determined according to a signal of a technology adopted by the second prediction mode.

In an exemplary embodiment, the electronic device may further include a transmission device and an input/output device, where the transmission device is connected to the processor, and the input/output device is connected to the processor.

As an exemplary implementation of the present embodiment, the electronic device may be further configured to execute the foregoing operations S1 and S2 through the computer program.

For specific examples in the present embodiment, reference may be made to the examples described in the foregoing embodiments and exemplary implementations, and details are not described herein again in the present embodiment.

Apparently, those having ordinary skill in the art should understand that the modules or operations of the present disclosure described above can be implemented by a general-purpose computing device, centralized on a single computing device, or distributed on a network composed of a plurality of computing devices. They can be implemented by program code executable by the computing devices, so that they can be stored in a storage device and executed by the computing devices, and in some cases, the operations shown or described can be executed in an order different from that herein, or they can be separately manufactured into individual integrated circuit modules, or a plurality of modules or operations thereof can be manufactured into a single integrated circuit module. Thus, the present disclosure is not limited to any specific combination of hardware and software.

The foregoing descriptions are merely exemplary embodiments of the present disclosure and are not intended to limit the present disclosure. For those having ordinary skill in the art, the present disclosure may have various modifications and variations. Any modifications, equivalent replacements, improvements and the like made within the principles of the present disclosure shall fall within the protection scope of the present disclosure.

## Claims

1. A signal determination method, comprising:
determining prediction information of a first prediction mode; and
in a case of determining that the prediction information is from a second prediction mode, determining a signal of a technology adopted by the first prediction mode according to a signal of a technology adopted by the second prediction mode.

2. The signal determination method according to claim 1, wherein after determining the prediction information of the first prediction mode, the signal determination method further comprises:
in a case of determining that the prediction information is not from the second prediction mode, determining that a signal of a part of technologies of the first prediction mode is identical to a signal of the same technologies in the prediction information.

3. The signal determination method according to claim 2, wherein after determining the signal of the technology adopted by the first prediction mode according to the signal of the technology adopted by the second prediction mode, or determining that the signal of the part of technologies of the first prediction mode is identical to the signal of the same technologies in the prediction information, the signal determination method further comprises:
determining whether to enable a relevant prediction processing technology according to the determined signal of the technology adopted by the first prediction mode; and
in a case of determining to enable the relevant prediction processing technology, applying the relevant prediction processing technology to a target reference block.

4. The signal determination method according to claim 1, wherein determining the signal of the technology adopted by the first prediction mode according to the signal of the technology adopted by the second prediction mode comprises:
in a case where the first prediction mode is an Intra Block Copy, IBC, mode and the second prediction mode is an Intra Template Match Prediction, ITMP, mode, enabling an IBC Filter, FIBC, of a current coding unit when a Filter Linear Model, FLM, of a candidate ITMP is enabled, and disabling the FIBC of the current coding unit when the FLM of the candidate ITMP is disabled, so as to obtain the signal of the technology adopted by the first prediction mode.

5. The signal determination method according to claim 1, wherein determining the signal of the technology adopted by the first prediction mode according to the signal of the technology adopted by the second prediction mode comprises:
in a case where the first prediction mode is an Intra Block Copy, IBC, mode and the second prediction mode is an Intra Template Match Prediction, ITMP, mode, enabling a Local Illumination Compensation, LIC, of a current coding unit when a Template Match Prediction-Local Illumination Compensation, TMP-LIC, of a candidate ITMP is enabled, and disabling the LIC of the current coding unit when the TMP-LIC of the candidate ITMP is disabled, so as to obtain the signal of the technology adopted by the first prediction mode.

6. The signal determination method according to claim 1, wherein determining the prediction information of the first prediction mode comprises:
determining a coding unit to be subjected to encoding processing or a decoding unit to be subjected to decoding processing; and
determining the prediction information of the first prediction mode according to the coding unit or the decoding unit.

7. The signal determination method according to claim 6, wherein determining the prediction information of the first prediction mode according to the coding unit or the decoding unit comprises:
determining a candidate set corresponding to the coding unit or the decoding unit; and
traversing the candidate set to acquire the prediction information of the first prediction mode.

8. A signal determination device, comprising:
a first determination module, configured to determine prediction information of a first prediction mode; and
a second determination module, configured to, in a case of determining that the prediction information is from a second prediction mode, determine a signal of a technology adopted by the first prediction mode according to a signal of a technology adopted by the second prediction mode.

9. A computer-readable storage medium having a computer program stored therein, wherein the computer program, when running on a processor, causes the processor to execute the signal determination method according to any one of claims 1 to 7.

10. An electronic device, comprising a memory and a processor, wherein a computer program is stored in the memory, and the processor is configured to run the computer program to execute the signal determination method according to any one of claims 1 to 7.
